# EUROPÄISCHE PATENTSCHRIFT

(11) **EP 3 371 734 B1**
(45) Veröffentlichungstag und Bekanntmachung des Hinweises auf die Patenterteilung: **17.02.2021**
(21) Anmeldenummer: 16801391.0
(22) Anmeldetag: 02.11.2016
(51) Int. Cl.: G06K 1/12, G06K 19/06, G06F 16/955

(54) **VERFAHREN ZUR BEREITSTELLUNG VON INFORMATIONEN IN MASCHINENLESBARER FORM**
METHOD FOR PROVIDING INFORMATION IN A MACHINE-READABLE FORM
PROCÉDÉ DE PRODUCTION D'INFORMATIONS SOUS FORME LISIBLE PAR MACHINE

(30) Priorität: 02.11.2015 DE 102015118755
(43) Veröffentlichungstag der Anmeldung: 12.09.2018
(73) Patentinhaber: Voigt, Martin, 64283 Darmstadt (DE)
(72) Erfinder: Voigt, Martin, 64283 Darmstadt (DE)
(74) Vertreter: Habermann Intellectual Property Partnerschaft von Patentanwälten mbB
(86) Internationale Anmeldenummer: PCT/EP2016/076437
(87) Internationale Veröffentlichungsnummer: WO 2017/076912

(56) Entgegenhaltungen:
- EP-A1- 2 617 498
- DE-A1-102007 061 626
- US-A1- 2009 280 886

## Beschreibung

Die Erfindung betrifft ein Verfahren zur Bereitstellung erster und zweiter Informationen in maschinenlesbarer Form, wobei den ersten Informationen in einem ersten Initialisierungsschritt eine eindeutige erste Datenbankreferenzkennung bestehend aus mindestens einem Zeichen zugewiesen wird, wobei in einem nachfolgenden ersten Kennungsübertragungsschritt die erste Datenbankreferenzkennung durch Markierung vorgegebener Zellen einer 2-D-Kennungsmatrix auf die 2-D-Kennungsmatrix übertragen wird, wobei jedes Zeichen der ersten Datenbankreferenzkennung durch genau einen Zellenwert repräsentiert wird, wobei die 2-D-Kennungsmatrix Zellen aufweist, welchen je ein Zellenwert zugeordnet ist, wobei die 2-D-Kennungsmatrix linienförmige Begrenzungen zur Abgrenzung der Zellen aufweist und wobei die Begrenzungen und die Zellen so ausgestaltet sind, dass die Zellenwerte optisch erfassbar sind.

In der Druckschrift US 2009/280886 A1 wird ein Lottoschein mit zwei Bereichen beschrieben. Ein erster Bereich umfasst das eigentliche Spielfeld, in dem Zahlenwerte markiert werden können. Die einzelnen Zellen des Spielfelds sind matrixförmig angeordnet und bilden eine 2-D-Kennungsmatrix.

Ein ständig wiederkehrendes Problem insbesondere bei Kurierdienstleistungen, bei denen ein Kurier eine Sendung persönlich überbringt, ist die Ermittlung der Empfängeradresse vor Ort. Diese Ermittlung wird unter anderem dadurch erschwert, dass beispielsweise Straßenschilder für einen europäischen Kurier, der eine Sendung in Asien ausliefern soll, häufig kaum zu entziffern ist. Zudem kann es auch vorkommen, dass entsprechende Straßenschilder oder vergleichbare Markierungen zur Identifizierung der korrekten Adresse gar nicht vorhanden sind.

Um diese Situation zu verbessern, wird es als Aufgabe der Erfindung angesehen ein Verfahren bereitzustellen, bei dem insbesondere Adressinformationen einfach und in maschinenlesbarer Form bereitgestellt werden können.

Diese Aufgabe wird erfindungsgemäß durch ein Verfahren nach Anspruch 1 gelöst. Vorteilhafte Ausführungsformen sind Gegenstand der abhängigen Ansprüche.

Auf diese Weise ist es möglich, neben den ersten Informationen durch die zu einem späteren Zeitpunkt erfolgende Übertragung der zweiten Datenbankreferenzkennung auf die 2-D-Kennungsmatrix die zweiten Informationen mit Hilfe der 2-D-Kennungsmatrix zur Verfügung zu stellen. Die ersten Informationen und die zweiten Informationen können dabei grundsätzlich beliebige Informationen umfassen.

Beispielsweise kann dieses Verfahren besonders vorteilhaft im Versandhandel eingesetzt werden. Im Versandhandel ist es üblich und vorgesehen, dass der Besteller eines Produkts die Möglichkeit hat, das Produkt an den Verkäufer zurückzusenden. Zu diesem Zweck bieten die Verkäufer in Ihren Online-Portalen häufig die Möglichkeit an, ein entsprechenden Rücksendeschein ausdrucken zu können. Dieser Rücksendeschein beinhaltet bereits sämtliche Sendungsinformationen, die zur Bearbeitung der Sendung durch den Paketdienst sowie durch den Verkäufer erforderlich sind. Diese Informationen sind üblicherweise durch einen Strichcode oder einen Dot-Matrix-Code kodiert auf dem Rücksendeschein aufgedruckt. Der Besteller druckt diesen Rücksendeschein aus und klebt ihn auf das für die Rücksendung verwendete Paket auf. Sofern wie üblich das bereits von dem Verkäufer versendete Paket für die Rücksendung verwendet wird, muss der Besteller hierbei darauf achten, dass die ursprünglichen und auf das Paket aufgebrachten Adressinformationen des Bestellers bei der Rücksendung nicht mehr sichtbar sind, um eine versehentliche erneute Zustellung an den Besteller selbst zu vermeiden.

Durch die Verwendung des erfindungsgemäßen Verfahrens kann dieser Vorgang erheblich vereinfacht werden. In dem ersten Initialisierungsschritt wird der Adresse des Bestellers eine erste Datenbankreferenzkennung zugewiesen. Diese Zuweisung erfolgt im Versandhandel üblicherweise einmalig, beispielsweise bei der ersten Bestellung des Bestellers. Bei der nachfolgenden Distribution einer Bestellung wird die erste Datenbankreferenzkennung in dem Kennungsübertragungsschritt auf eine 2-D-Kennungsmatrix übertragen und auf das Paket aufgebracht. Mit Hilfe der ersten Datenbankreferenzkennung kann der Paketdienst die Adresse des Bestellers aus der Datenbank abrufen und das Paket zustellen. Insofern kann auf die vorangehenden Ausführungen verwiesen werden.

Wenn der Besteller das Paket zurücksenden möchte, kann der Besteller wie auch jetzt üblich seinen Rücksendewunsch in dem Online-Portal des Verkäufers angeben. Anstelle eines auszudruckenden Rücksendescheins wird dem Besteller jedoch lediglich die zweite Datenbankreferenzkennung angezeigt, die der Besteller manuell auf die bereits verwendete und auf dem Paket angebrachte 2-D-Kennungsmatrix aufbringen kann. Die zweite Datenbankreferenzkennung ist mit zweiten Informationen verknüpft, die beispielsweise die Rücksendeadresse sowie weitere Sendungsinformationen umfassen. Die zweite Datenbankreferenzkennung wurde in dem zweiten Initialisierungsschritt nach Übermittlung des Rücksendewunsches erzeugt.

Um die zweite Datenbankreferenzkennung von der ersten Datenbankreferenzkennung unterscheiden zu können, ist erfindungsgemäß vorgesehen, dass die erste Datenbankreferenzkennung und die zweite Datenbankreferenzkennung durch unterschiedliche Markierungszeichen auf die 2-D-Kennungsmatrix übertragen werden. Beispielsweise können die entsprechenden Zellen zur Markierung der ersten Datenbankreferenzkennung durch Kreuze identifiziert und die Zellen zur Markierung der zweiten Datenbankreferenzkennung durch Kreise identifiziert werden. Auf diese Weise können die Datenbankreferenzkennungen einfach und deutlich sowohl automatisiert als auch manuell erfasst und voneinander unterschieden werden.

Vorteilhafterweise ist erfindungsgemäß vorgesehen, dass die 2-D-Kennungsmatrix nach dem ersten Initialisierungsschritt in einem Kennungsmatrixerstellungsschritt erstellt wird, wobei unmittelbar im Anschluss an die Erstellung der 2-D-Kennungsmatrix die erste Datenbankreferenzkennung in dem ersten Kennungsübertragungsschritt auf die 2-D-Kennungsmatrix übertragen wird.

Auf diese Weise können weitere Probleme, die insbesondere bei der Bereitstellung von Adressinformationen auftreten, einfach gelöst werden. Soll ein Kurier beispielsweise eine Sendung von Europa nach Asien transportieren, so kann der Empfänger der Sendung seiner Adressinformation in dem ersten Initialisierungsschritt eine eindeutige erste Datenbankreferenzkennung zuordnen lassen und die erste Datenbankreferenzkennung sowie seine Adressinformation in einer Datenbank hinterlegen lassen.

Anschließend kann der Empfänger in dem Erstellungsarbeitsgang die 2-D-Kennungsmatrix erstellen. Zu diesem Zweck kann der Empfänger die 2-D-Kennungsmatrix beispielsweise entweder mit einem Drucker ausdrucken oder insbesondere im ländlichen asiatischen Raum, in dem häufig keine Drucker zur Verfügung stehen, einfach manuell aufzeichnen. In demselben Arbeitsgang überträgt dann der Empfänger die erste Datenbankreferenzkennung auf die 2-D-Kennungsmatrix und bringt die 2-D-Kennungsmatrix anschließend gut sichtbar beispielsweise an der Zugangstür zu dem Gebäude an, in dem der Empfänger die Sendung in Empfang nehmen möchte. Es ist selbstverständlich auch möglich, dass der Empfänger die 2-D-Kennungsmatrix beispielsweise mit Hilfe von Kreide unmittelbar auf die Hauswand aufbringt oder zur Erstellung der 2-D-Kennungsmatrix andere Materialien oder Verfahren einsetzt. Es ist erfindungsgemäß auch möglich, dass die 2-D-Kennungsmatrix auf einem dazu geeigneten elektronischen Display angezeigt wird.

Anschließend übermittelt der Empfänger die erste Datenbankreferenzkennung an den Kurier oder Versender, der auf Grundlage der in der Datenbank hinterlegten ersten Informationen die Adresse des Empfängers aufsucht. Um die Adresse nunmehr vor Ort eindeutig identifizieren zu können, kann der Kurier entweder beispielsweise mit einem entsprechend eingerichteten Smartphone die 2-D-Kennungsmatrix einlesen und auf diese Weise bestätigen lassen oder aber die Kennung selber erfassen, wiederum beispielsweise per SMS an die Datenbank übermitteln und die korrekte Empfängeradresse bestätigen lassen. Vorteilhafterweise wird eine Zugangsberechtigung beispielsweise des Kuriers vor dem Zugriff auf die Datenbank überprüft, um eine unberechtigte Nutzung der in der Datenbank hinterlegten Daten zu vermeiden.

Aus dem Stand der Technik sind zahlreiche Verfahren bekannt, um in Matrix-Codes kodierte Informationen automatisiert auszulesen und zu decodieren. Diese bekannten Verfahren können grundsätzlich auch so angepasst werden, dass die manuell erstellte 2-D-Kennungsmatrix automatisiert erfasst werden kann. Im Unterschied zu den bekannten, automatisiert erfassbaren Matrix-Codes kann die bei dem erfindungsgemäßen Verfahren verwendete 2-D-Kennungsmatrix jedoch manuell erstellt und bei Bedarf auch ausgelesen werden. Dadurch, dass die Information bzw. die Informationen nicht unmittelbar in der 2-D-Kennungsmatrix kodiert wird, sondern lediglich die Datenbankreferenzkennung unkodiert auf die 2-D-Kennungsmatrix übertragen wird, können zudem quasi beliebige Informationen auch unabhängig von der Informationsmenge bzw. der Größe der Informationen zur Verfügung gestellt werden.

Die Verwendung der linienförmigen Begrenzung ist erforderlich, um die Zellen eindeutig identifizieren zu können. Bei der linienförmigen Begrenzung kann es sich erfindungsgemäß beispielsweise um durchgezogene Linien, strichpunktierte Linien, schattierte Absetzungen einzelner Zellen zu benachbarten Zellen und dergleichen handeln.

Mit Hilfe des erfindungsgemäßen Verfahrens können selbstverständlich beliebige Informationen bereitgestellt werden. Beispielsweise kann das erfindungsgemäße Verfahren auch für einen automatisierten Bezahlvorgang verwendet werden. Zu diesem Zweck können erfindungsgemäß Zahlungsinformationen beispielsweise bei einem Verkaufsautomaten auf einem Display angezeigt und mit Hilfe eines entsprechend eingerichteten Smartphones erfasst und dadurch der Bezahlvorgang über bekannte Zahlungsmethoden einfach ausgelöst und abgeschlossen werden. Sofern kein Erfassungsgerät zur automatisierten Erfassung der 2-D-Kennungsmatrix zur Verfügung steht, kann die Kennung von dem Benutzer erfindungsgemäß jedoch auch manuell ausgelesen und beispielsweise mit einer SMS an einen Zahlungsdienstleister übermittelt werden, der die Zahlung auf Grundlage der Kennung für den Benutzer des entsprechenden Mobilfunkgeräts veranlasst.

Es ist auch möglich und erfindungsgemäß vorgesehen, dass mindestens ein Zeichen der ersten Datenbankreferenzkennung auch die zweite Datenbankreferenzkennung aufweist, sodass mindestens eine Zelle der 2-D-Kennungsmatrix sowohl in dem ersten Kennungsübertragungsschritt als auch in dem zweiten Kennungsübertragungsschritt markiert wird. Die erste Datenbankreferenzkennung und die zweite Datenbankreferenzkennung können also jeweils mindestens ein identisches Zeichen beinhalten, sodass die jeweilige, dieses Zeichen repräsentierende Zelle der 2-D-Kennungsmatrix sowohl bei der Übertragung der ersten Datenbankreferenzkennung als auch bei der Übertragung der zweiten Datenbankreferenzkennung markiert wird.

Die Verwendung weiterer Datenbankreferenzkennungen kann erfindungsgemäß auch bei dem zuerst vorgestellten Verfahren angewendet werden. Zu diesem Zweck ist bei dem zuerst beschriebenen Verfahren erfindungsgemäß vorgesehen, dass in einem späteren zweiten Kennungsübertragungsschritt eine eindeutige zweite Datenbankreferenzkennung durch Markierung vorgegebener Zellen der 2-D-Kennungsmatrix auf die 2-D-Kennungsmatrix übertragen wird, wobei die zweite Datenbankreferenzkennung in einem zweiten Initialisierungsschritt zweiten Informationen zugeordnet wurde.

Um die ersten und/oder zweiten Informationen möglichst einfach und an möglichst beliebigen Orten zur Verfügung stellen zu können, ist erfindungsgemäß vorgesehen, dass die ersten Informationen und/oder die zweiten Informationen von einem Benutzer einer elektronischen Datenverarbeitungsvorrichtung übergeben werden, den ersten Informationen und/oder die zweiten Informationen die erste Datenbankreferenzkennung bzw. die zweite Datenbankreferenzkennung von einem entsprechend ausgebildeten und auf der elektronischen Datenverarbeitungsvorrichtung hinterlegten und ausgeführten Software-Modul automatisiert zugewiesen wird und die ersten Informationen und/oder die zweiten Informationen mit der die ersten Informationen und/oder die zweiten Informationen identifizierenden ersten Datenbankreferenzkennung bzw. zweiten Datenbankreferenzkennung in einem Speicher der elektronischen Datenverarbeitungsvorrichtung gespeichert werden.

Zur einfachen Übertragung der ersten Datenbankreferenzkennung und/oder der zweiten Datenbankreferenzkennung auf die 2-D-Kennungsmatrix in dem Erstellungsarbeitsschritt ist erfindungsgemäß vorgesehen, dass dem Benutzer die erste Datenbankreferenzkennung und/oder die zweite Datenbankreferenzkennung auf einer digital-elektronischen Anzeigevorrichtung der elektronischen Datenverarbeitungsvorrichtung oder einer elektronischen Anzeigevorrichtung eines datenleitend mit der elektronischen Datenverarbeitungsvorrichtung verbundenen Clients angezeigt wird. Bei dem Client kann es sich um einen handelsüblichen PC, ein Smartphone, ein Mobiltelefon oder ein beliebiges anderes geeignetes Gerät handeln.

Zur Bereitstellung der ersten und/oder zweiten Informationen an möglichst beliebigen Orten ist erfindungsgemäß vorgesehen, dass es sich bei der elektronischen Datenverarbeitungsvorrichtung um einen oder mehrere datenleitend miteinander verbundene Server handelt. Die Server sind dabei wie aus dem Stand der Technik bekannt zur Bereitstellung von Informationen aus Datenbanken eingerichtet und beispielsweise über eine Internetverbindung zugänglich und erreichbar.

Zur Erstellung der 2-D-Kennungsmatrix ist vorgesehen, dass eine noch nicht verwendete Kennungsmatrix auf ein geeignetes Medium aufgedruckt wird oder manuell gezeichnet wird. Auf diese Art und Weise kann die 2-D-Kennungsmatrix ohne besondere Anforderungen an die zur Verfügung stehende Technik einfach erstellt werden.

Bei einer besonders vorteilhaften Ausgestaltung des erfindungsgemäßen Verfahrens ist vorgesehen, dass die erste Datenbankreferenzkennung und/oder die zweite Datenbankreferenzkennung in dem ersten Kennungsübertragungsschritt bzw. dem zweiten Kennungsübertragungsschritt manuell auf die 2-D-Kennungsmatrix übertragen wird. Dadurch, dass sowohl die 2-D-Kennungsmatrix manuell erstellt als auch die erste und/oder zweite Datenbankreferenzkennung manuell auf die 2-D-Kennungsmatrix übertragen werden kann, kann das Verfahren zur Bereitstellung von Informationen auch in Gebieten eingesetzt werden, in denen keine entsprechenden Drucker oder dergleichen zur Verfügung stehen.

Beispielsweise kann das erfindungsgemäße Verfahren auch zur Adressierung eines Sendungsempfängers verwendet werden, der sich in einem Flüchtlingscamp aufhält und dort keinen Zugang zu geeigneter Computerhardware besitzt. Der Aufenthaltsort bzw. die Adresse des Sendungsempfängers wird insbesondere in einem Flüchtlingscamp vorteilhafterweise durch GPS-Koordinaten angegeben. Auf diese Weise können Sendungen nahezu weltweit an den Empfänger zugestellt werden.

Insbesondere bei Kurierfahrten kommt es zudem häufig vor, dass der Sendungsempfänger sich kurzfristig nicht an dem Ort aufhält bzw. aufhalten kann, der für die Übergabe der Sendung ursprünglich vorgesehen war. Dieser Situation kann mit Hilfe des erfindungsgemäßen Verfahrens einfach und zuverlässig dadurch begegnet werden, dass die erste und/oder zweite Datenbankreferenzkennung auf eine entsprechende Benutzeranfrage hin anderen Informationen zugeordnet wird. Auf diese Weise kann der Sendungsempfänger seinen Aufenthaltsort bzw. den Ort, an dem er die Sendung empfangen möchte, auch kurzfristig ändern.

Um die 2-D-Kennungsmtrix einfach erstellen und auch manuell noch erfassen zu können, ist erfindungsgemäß vorgesehen, dass die 2-D-Kennungsmatrix zehn Zeilen und zehn Spalten aufweist. Vorteilhafterweise sind die einzelnen Zellen der 2-D-Kennungsmatrix beispielsweise mit fortlaufenden Zahlen oder mit einer Zahlenbuchstabenkombination, vergleichbar zu der Kennzeichnung der Felder eines Schachbretts gekennzeichnet.

Damit die erste und/oder zweite Datenbankreferenzkennung eindeutig von der 2-D-Kennungsmatrix erfasst werden kann, ist erfindungsgemäß vorgesehen, dass die Zellenwerte der markierten Zellen in einer vorgegebenen Reihenfolge ausgelesen werden. Beispielsweise ist es erfindungsgemäß vorgesehen, dass die einzelnen Zellen zeilenweise von links nach rechts auszulesen sind.

Um die ersten und/oder zweiten Informationen anzuzeigen und beispielsweise die von einem Kurier ermittelte Empfängeradresse bestätigen zu können, ist erfindungsgemäß vorgesehen, dass die ersten Informationen und/oder zweiten Informationen von einem entsprechend eingerichteten elektronischen Lesegerät in einem Erfassungsschritt ausgelesen und an die datenleitend mit dem Lesegerät verbundene Datenverarbeitungsvorrichtung übermittelt wird, wobei die elektronische Datenverarbeitungsvorrichtung die der ersten Datenbankreferenzkennung bzw. der zweiten Datenbankreferenzkennung zugeordneten ersten Informationen bzw. zweiten Informationen aus dem Speicher ausliest und an das Lesegerät übermittelt. Bei dem Lesegerät kann es sich beispielsweise um ein entsprechend eingerichtetes Smartphone oder dergleichen handeln.

Zur automatischen Erfassung der ersten und/oder zweiten Datenbankreferenzkennung ist vorteilhafterweise vorgesehen, dass die erste Datenbankreferenzkennung und/oder die zweite Datenbankreferenzkennung automatisiert mit einer Kameraeinrichtung des Lesegeräts erfasst und von einem entsprechend angepassten und auf dem Lesegerät ausgeführten Software-Modul verarbeitet wird.

Um die ersten und/oder zweiten Informationen auch bei Verwendung beispielsweise eines einfachen Mobilfunkgeräts, das die erste bzw. zweite Datenbankreferenzkennung nicht automatisiert erfassen kann, bereitstellen zu können, ist erfindungsgemäß vorgesehen, dass die erste Datenbankreferenzkennung und/oder die zweite Datenbankreferenzkennung manuell über eine entsprechende Eingabeeinrichtung des Lesegeräts von dem Benutzer des Lesegeräts an das Lesegerät übergeben wird. Anschließend kann die erste bzw. zweite Datenbankreferenzkennung erfindungsgemäß beispielsweise per SMS oder fernmündlich an die Datenverarbeitungsvorrichtung versandt und die Informationen von der Datenverarbeitungsvorrichtung ebenfalls per SMS an das Lesegerät oder fernmündlich übermittelt werden.

Bei einer besonders vorteilhaften Ausgestaltung des erfindungsgemäßen Verfahrens ist vorgesehen, dass mindestens eine Zelle der Kennungsmatrix Orientierungskennzeichen aufweisen, um die Orientierung der Kennungsmatrix vorzugeben. Auf diese Weise kann die Reihenfolge eindeutig vorgegeben werden, in der die Zellenwerte der markierten Zellen zu der ersten bzw. zweiten Datenbankreferenzkennung zusammengestellt werden müssen. Als Orientierungskennzeichen können beispielsweise in einander gegenüberliegenden Ecken der 2-D-Kennungsmatrix angeordnete Zeichen verwendet werden, wobei erfindungsgemäß ein 0 zur Kennzeichnung der linken oberen Ecke und ein X zur Kennzeichnung der rechten unteren Ecke verwendet wird. Für eine eindeutige Vorgabe der Orientierung durch das X und das O werden die Zellen der rechten oberen Ecke und der linken unteren Ecke der 2-D-Kennungsmatrix erfindungsgemäß nicht zur Kennzeichnung der Datenbankreferenzkennung verwendet oder die Datenbankreferenzkennung so vorgegeben, dass diese Zellen nicht verwendet werden müssen.

Weitere vorteilhafte Ausgestaltungen des erfindungsgemäßen Verfahrens werden anhand von in der Zeichnung dargestellten Ausführungsbeispielen näher erläutert.

Es zeigt:
Figur 1 eine schematische Darstellung einer 2-D-Kennungsmatrix mit einer ersten Datenbankreferenzkennung,
Figur 2 ein schematisch dargestelltes Ablaufdiagramm einer ersten Variante des erfindungsgemäßen Verfahrens,
Figur 3 eine schematische Darstellung einer 2-D-Kennungsmatrix mit einer ersten und einer zweiten Datenbankreferenzkennung,
Figur 4 ein schematisch dargestelltes Ablaufdiagramm einer zweiten Variante des erfindungsgemäßen Verfahrens und
Figur 5 ein schematisch dargestelltes Ablaufdiagramm einer dritten Variante des erfindungsgemäßen Verfahrens

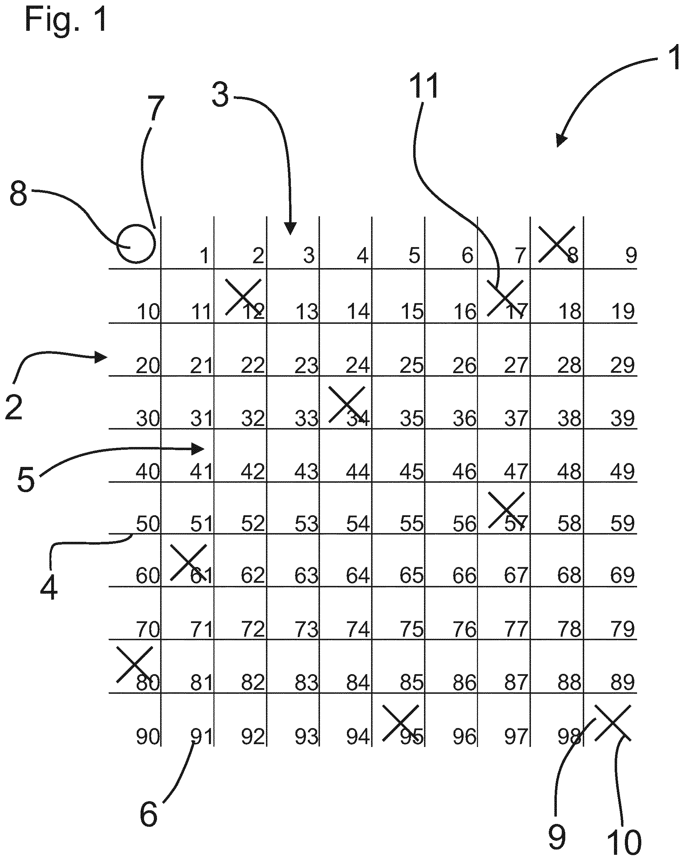

Figur 1 zeigt eine 2-D-Kennungsmatrix 1, mit zehn Zeilen 2 und zehn Spalten 3, wobei die Zeilen 2 und Spalten 3 durch linienförmige Begrenzungen 4 gekennzeichnet sind, so dass von den linienförmigen Begrenzungen 4 Zellen 5 gebildet werden. Den einzelnen Zellen 5 sind Zellenwerte 6 von 1 bis 98 zugeordnet. In der Darstellung sind exemplarisch einzelne Zeilen 2, Spalten 3, Begrenzungen 4, Zellen 5 und Zellenwerte 6 mit einem Bezugszeichen gekennzeichnet.

Eine obere linke Zelle 7 ist mit einem O 8 und eine untere Zelle 9 mit einem X 10 markiert. Durch das O 8 und das X 10 werden die linke obere Ecke und die rechte untere Ecke der 2-D-Kennungsmatrix 1 und damit die vorgesehene Orientierung der 2-D-Kennungsmatrix 1 vorgegeben.

Einzelne Zellen 5 der 2-D-Kennungsmatrix 1 sind zudem in dem Beispiel ebenfalls mit einem X 11 markiert, wobei in der Darstellung wiederum exemplarisch ein X 11 mit einem Bezugszeichen gekennzeichnet ist. Die erste Datenbankreferenzkennung, die durch die Markierungen 11 vorgegeben ist, ergibt sich dadurch, dass die 2-D-Kennungsmatrix 1 zeilenweise von der mit dem O 8 markierten oberen linken Zelle 7 aus jeweils von links nach rechts ausgelesen wird. In der exemplarisch dargestellten Situation ergibt sich die erste Datenbankreferenzkennung daher zu 8-12-17-34-57-61-80-95.

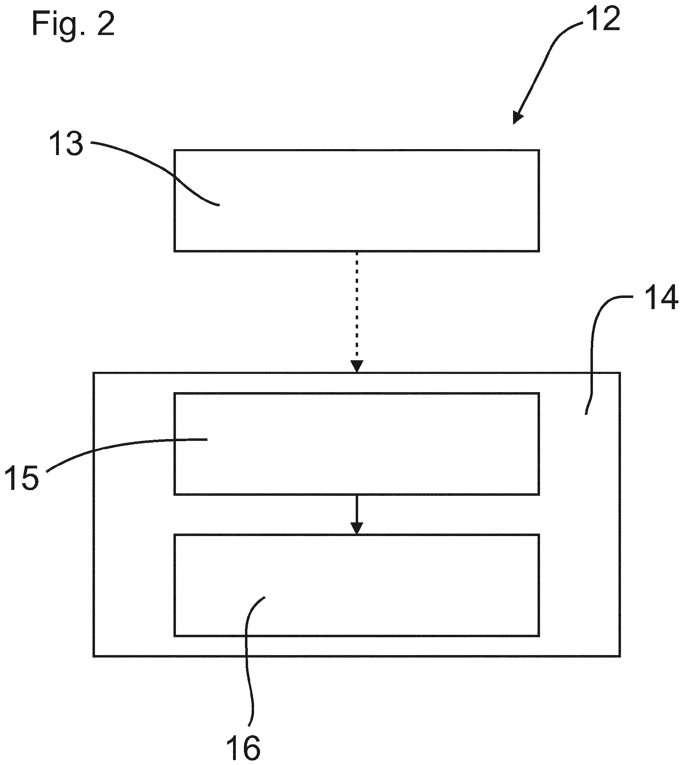

In Figur 2 ist schematisch ein Ablaufdiagramm einer ersten Variante des erfindungsgemäßen Verfahrens 12 dargestellt. Bei der dargestellten Variante des erfindungsgemäßen Verfahrens 12 werden in einem ersten Initialisierungsschritt 13 ersten Informationen eine eindeutige erste Datenbankreferenzkennung bestehend aus mindestens einem Zeichen zugewiesen. In einem nachfolgenden Erstellungsarbeitsgang 14 wird zunächst eine 2-D-Kennungsmatrix in einem Kennungsmatrixerstellungsschritt 15 erstellt. In demselben Erstellungsarbeitsgang 14 wird anschließend oder gleichzeitig mit dem Kennungsmatrixerstellungsschritt 15 in einem Kennungsübertragungsschritt 16 die Datenbankreferenzkennung durch Markierung vorgegebener Zellen der 2-D-Kennungsmatrix auf die 2-D-Kennungsmatrix übertragen.

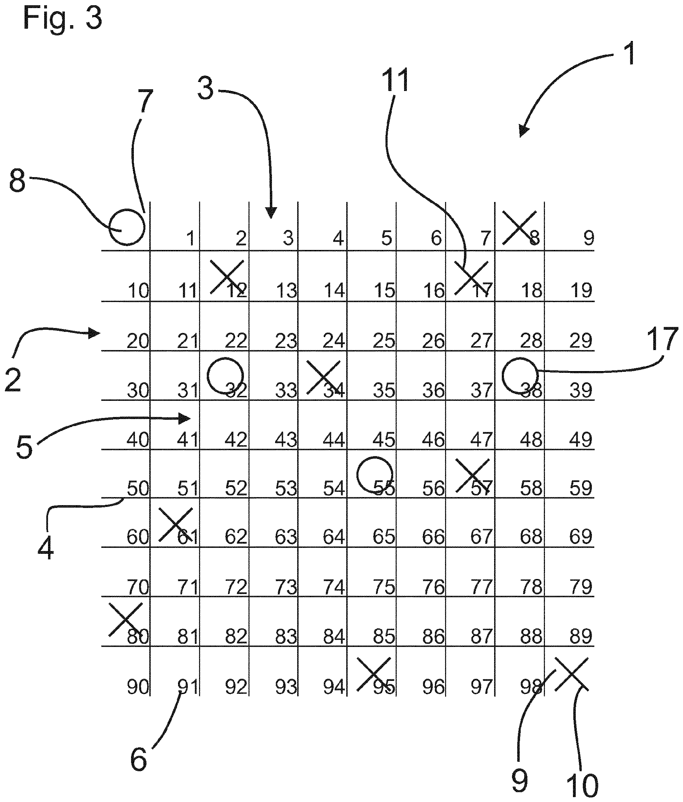

Figur 3 zeigt eine schematische Darstellung der in Figur 1 dargestellten 2-D-Kennungsmatrix 1, wobei eine zweite Datenbankreferenzkennung durch mit O 17 markierte Zellen 5 vorgegeben ist. In der Darstellung ist wiederum exemplarisch ein O 11 mit einem Bezugszeichen gekennzeichnet.

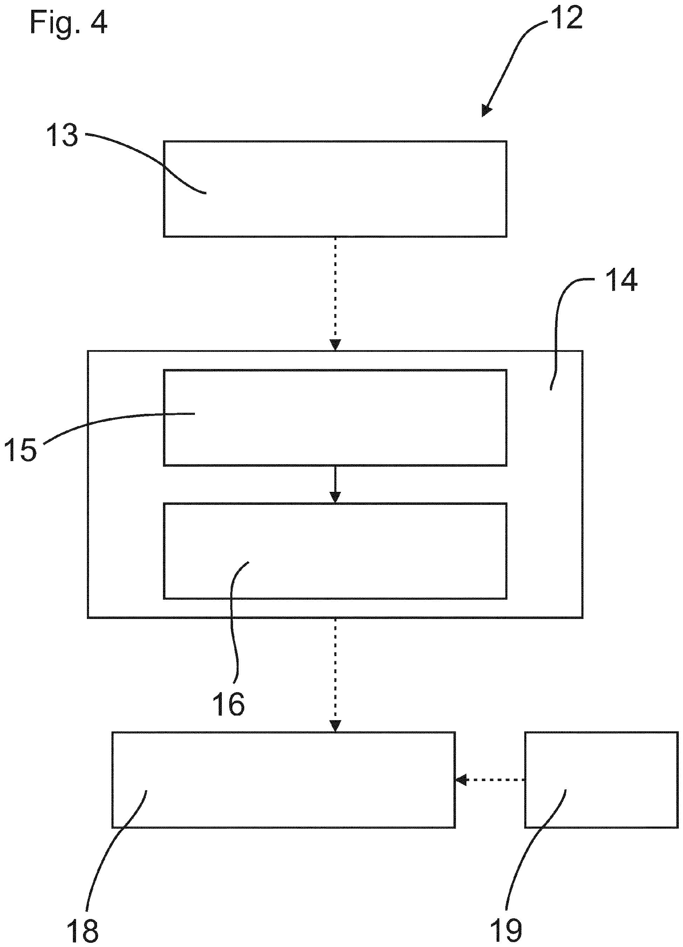

Figur 4 zeigt schematisch ein Ablaufdiagramm einer zweiten Variante des erfindungsgemäßen Verfahrens 12. Bei der zweiten Variante wird zu einem auf den Erstellungsarbeitsgang 14, in dem der Kennungsmatrixerstellungsschritt 15 und der Kennungsübertragungsschritt 16 durchgeführt wird, folgenden späteren Zeitpunkt ein zweiter Kennungsübertragungsschritt 18 durchgeführt, in dem eine zweite Datenbankreferenzkennung durch Markierung vorgegebener Zellen der 2-D-Kennungsmatrix auf die 2-D-Kennungsmatrix übertragen wird. Die zweite Datenbankreferenzkennung wurde in einem zweiten Initialisierungsschritt 19 zweiten Informationen zugeordnet.

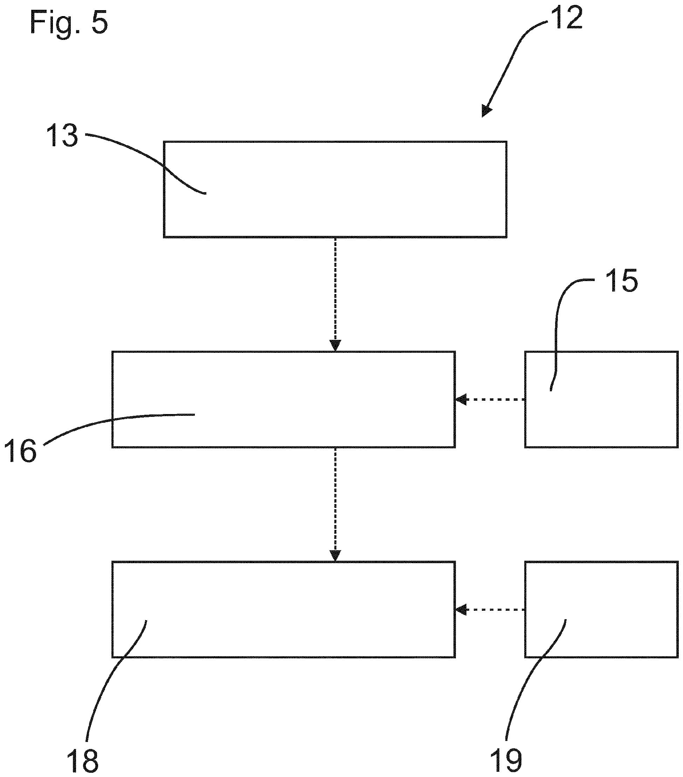

In Figur 5 ist schematisch ein Ablaufdiagramm einer dritten Variante des Verfahrens 12 dargestellt. Ersten Informationen wird in einem ersten Initialisierungsschritt 13 eine erste Datenbankkennung zugeordnet. In einem nachfolgenden ersten Kennungsübertragungsschritt 16 wird die erste Datenbankreferenzkennung durch Markierung vorgegebener Zellen einer 2-D-Kennungsmatrix auf die 2-D-Kennungsmatrix übertragen. Die 2-D-Kennungsmatrix wurde unabhängig von dem ersten Kennungsübertragungsschritt 16 in einem separaten Kennungsmatrixerstellungsschritt 15 erstellt. In einem späteren zweiten Kennungsübertragungsschritt 18 wird eine zweite Datenbankreferenzkennung auf die 2-D-Kennungsmatrix übertragen.

In den schematisch dargestellten Ablaufdiagrammen sind zeitlich unmittelbar aufeinanderfolgende Verfahrensschritte mit durchgezogen dargestellten Pfeilen gekennzeichnet. Die gestrichelt dargestellten Pfeile kennzeichnen zeitliche Abläufe, die sowohl unmittelbar aufeinander folgen können, zwischen denen aber auch unbestimmte Zeiträume liegen können.

## Patentansprüche

1. Verfahren (12) zur Bereitstellung erster und zweiter Informationen in maschinenlesbarer Form, wobei den ersten Informationen in einem ersten Initialisierungsschritt (13) eine eindeutige erste Datenbankreferenzkennung bestehend aus mindestens einem Zeichen zugewiesen wird, wobei in einem nachfolgenden ersten Kennungsübertragungsschritt (16) die erste Datenbankreferenzkennung durch Markierung vorgegebener Zellen (5) einer 2-D-Kennungsmatrix (1) auf die 2-D-Kennungsmatrix (1) übertragen wird, wobei jedes Zeichen der ersten Datenbankreferenzkennung durch genau einen Zellenwert (6) repräsentiert wird, wobei die 2-D-Kennungsmatrix (1) Zellen (5) aufweist, welchen je ein Zellenwert (6) zugeordnet ist, wobei die 2-D-Kennungsmatrix (1) linienförmige Begrenzungen (4) zur Abgrenzung der Zellen (5) aufweist und wobei die Begrenzungen (4) und die Zellen (5) so ausgestaltet sind, dass die Zellenwerte (6) optisch erfassbar sind, **dadurch gekennzeichnet, dass** in einem späteren zweiten Kennungsübertragungsschritt (18) eine eindeutige zweite Datenbankreferenzkennung durch Markierung vorgegebener Zellen (5) der 2-D-Kennungsmatrix (1) auf die 2-D-Kennungsmatrix (1) übertragen wird, wobei die zweite Datenbankreferenzkennung in einem zweiten Initialisierungsschritt (19) den zweiten Informationen zugeordnet wurde.

2. Verfahren (12) gemäß Anspruch 1, **dadurch gekennzeichnet, dass** die 2-D-Kennungsmatrix (1) nach dem ersten Initialisierungsschritt (13) in einem Kennungsmatrixerstellungsschritt (15) erstellt wird, wobei unmittelbar im Anschluss an die Erstellung der 2-D-Kennungsmatrix (1) die erste Datenbankreferenzkennung in dem ersten Kennungsübertragungsschritt (16) auf die 2-D-Kennungsmatrix (1) übertragen wird.

3. Verfahren (12) gemäß Anspruch 1 oder Anspruch 2, **dadurch gekennzeichnet, dass** mindestens ein Zeichen der ersten Datenbankreferenzkennung auch die zweite Datenbankreferenzkennung aufweist, sodass mindestens eine Zelle (5) der 2-D-Kennungsmatrix (1) sowohl in dem ersten Kennungsübertragungsschritt (16) als auch in dem zweiten Kennungsübertragungsschritt (18) markiert wird.

4. Verfahren (12) gemäß einem der voranstehenden Ansprüche, **dadurch gekennzeichnet, dass** die ersten Informationen und/oder die zweiten Informationen von einem Benutzer einer elektronischen Datenverarbeitungsvorrichtung übergeben werden, den ersten Informationen und/oder die zweiten Informationen die erste Datenbankreferenzkennung bzw. die zweite Datenbankreferenzkennung von einem entsprechend ausgebildeten und auf der elektronischen Datenverarbeitungsvorrichtung hinterlegten und ausgeführten Software-Modul automatisiert zugewiesen wird und die ersten Informationen und/oder die zweiten Informationen mit der die ersten Informationen und/oder die zweiten Informationen identifizierenden ersten Datenbankreferenzkennung bzw. zweiten Datenbankreferenzkennung in einem Speicher der elektronischen Datenverarbeitungsvorrichtung gespeichert werden.

5. Verfahren (12) gemäß einem der voranstehenden Ansprüche, **dadurch gekennzeichnet, dass** dem Benutzer die erste Datenbankreferenzkennung und/oder die zweite Datenbankreferenzkennung auf einer digital-elektronischen Anzeigevorrichtung der elektronischen Datenverarbeitungsvorrichtung oder einer elektronischen Anzeigevorrichtung eines datenleitend mit der elektronischen Datenverarbeitungsvorrichtung verbundenen Clients angezeigt wird.

6. Verfahren (12) gemäß Anspruch 4 oder 5, **dadurch gekennzeichnet, dass** es sich bei der elektronischen Datenverarbeitungsvorrichtung um eine oder mehrere datenleitend miteinander verbundene Server handelt.

7. Verfahren (12) gemäß einem der voranstehenden Ansprüche, **dadurch gekennzeichnet, dass** eine noch nicht verwendete 2-D-Kennungsmatrix (1) auf ein geeignetes Medium aufgedruckt wird oder manuell gezeichnet wird.

8. Verfahren (12) gemäß einem der voranstehenden Ansprüche, **dadurch gekennzeichnet, dass** die erste Datenbankreferenzkennung und/oder die zweite Datenbankreferenzkennung in dem ersten Kennungsübertragungsschritt (16) bzw. dem zweiten Kennungsübertragungsschritt (18)manuell auf die 2-D-Kennungsmatrix (1) übertragen wird.

9. Verfahren (12) gemäß einem der voranstehenden Ansprüche, **dadurch gekennzeichnet, dass** die erste Datenbankreferenzkennung und/oder die zweite Datenbankreferenzkennung auf eine entsprechende Benutzeranfrage hin anderen Informationen zugeordnet wird.

10. Verfahren (12) gemäß einem der voranstehenden Ansprüche, **dadurch gekennzeichnet, dass** die erste Datenbankreferenzkennung und/oder die zweite Datenbankreferenzkennung von einem entsprechend eingerichteten elektronischen Lesegerät in einem Erfassungsschritt ausgelesen und an die datenleitend mit dem Lesegerät verbundene Datenverarbeitungsvorrichtung übermittelt wird, wobei die elektronische Datenverarbeitungsvorrichtung die der ersten Datenbankreferenzkennung bzw. der zweiten Datenbankreferenzkennung zugeordneten ersten Informationen bzw. zweiten Informationen aus dem Speicher ausliest und an das Lesegerät übermittelt.

11. Verfahren (12) gemäß Anspruch 10, **dadurch gekennzeichnet, dass** die erste Datenbankreferenzkennung und/oder die zweite Datenbankreferenzkennung automatisiert mit einer Kameraeinrichtung des Lesegeräts erfasst und von einem entsprechend angepassten und auf dem Lesegerät ausgeführten Software-Modul verarbeitet wird.

12. Verfahren (12) gemäß Anspruch 10 oder Anspruch 11, **dadurch gekennzeichnet, dass** die erste Datenbankreferenzkennung und/oder die zweite Datenbankreferenzkennung manuell über eine entsprechende Eingabeeinrichtung des Lesegeräts von dem Benutzer des Lesegeräts an das Lesegerät übergeben wird.

13. Verfahren (12) gemäß einem der Ansprüche 10 bis 12, **dadurch gekennzeichnet, dass** mindestens eine Zelle (5) der 2-D-Kennungsmatrix (1) Orientierungskennzeichen (8, 10) aufweisen, um die Orientierung der 2-D-Kennungsmatrix (1) vorzugeben.

## Claims

1. Method (12) for providing first and second data in machine-readable form, wherein a unique first database reference identifier consisting of at least one character is assigned to the first data in a first initialisation step (13), wherein in a subsequent first identifier transfer step (16), the first database reference identifier is transferred onto a 2-D identification matrix (1) by marking specific cells (5) of the 2-D identification matrix (1), wherein each character of the first database reference identifier is represented by exactly one cell value (6), wherein the 2-D identification matrix (1) has cells (5), each of which is assigned one cell value (6), wherein the 2-D identification matrix (1) has linear boundaries (4) to delineate the cells (5) and wherein the boundaries (4) and the cells (5) are designed such that the cell values (6) can be visibly detected, **characterised in that** in a subsequent second identifier transfer step (18), a unique second database reference identifier is transferred onto the 2-D identification matrix (1) by marking specific cells (5) of the 2-D identification matrix (1), wherein the second database reference identifier is assigned to the second data in a second initialisation step (19).

2. Method (12) according to claim 1, **characterised in that** the 2-D identification matrix (1) is created after the first initialisation step (13) in an identification matrix creation step (15), wherein immediately following the creation of the 2-D identification matrix (1), the first database reference identifier is transferred onto the 2-D identification matrix (1) in the first identifier transfer step (16).

3. Method (12) according to claim 1 or claim 2, **characterised in that** the second database reference identifier also has at least one character of the first database reference identifier, so that at least one cell (5) of the 2-D identification matrix (1) is marked both in the first identifier transfer step (16) and also in the second identifier transfer step (18).

4. Method (12) according to one of the preceding claims, **characterised in that** the first data and/or the second data are transferred by a user to an electronic data processing device, the first data and/or the second data are automatically assigned the first database reference identifier or the second database reference identifier by an appropriately qualified software module, stored and executed on the electronic data processing device, and the first data and/or the second data are saved in a memory on the electronic data processing device with the first database reference identifier or second database reference identifier identifying the first data and/or the second data.

5. Method (12) according to one of the preceding claims, **characterised in that** the first database reference identifier and/or the second database reference identifier is shown to the user on a digital-electronic display device of the electronic data processing device or an electronic display device of a client connected to the electronic data processing device by a data cable.

6. Method (12) according to claims 4 or 5, **characterised in that** the electronic data processing device consists of one or several servers connected to one another by data cables.

7. Method (12) according to one of the preceding claims, **characterised in that** an as yet unused 2-D identification matrix (1) is printed or manually drawn onto a suitable medium.

8. Method (12) according to one of the preceding claims, **characterised in that** the first database reference identifier and/or the second database reference identifier is manually transferred to the 2-D identification matrix (1) in the first identifier transfer step (16) or the second identifier transfer step (18).

9. Method (12) according to one of the preceding claims, **characterised in that** the first database reference identifier and/or the second database reference identifier is assigned to other data following a corresponding user request.

10. Method (12) according to one of the preceding claims, **characterised in that** the first database reference identifier and/or the second database reference identifier is read by an appropriately configured electronic reading apparatus in a detection step and transmitted to the processing device connected to the reading apparatus by a data cable, wherein the electronic data processing device reads the first data or second data assigned to the first database reference identifier or the second database reference identifier from the memory and transmits them to the reading apparatus.

11. Method (12) according to claim 10, **characterised in that** the first database reference identifier and/or the second database reference identifier is automatically detected using a camera means of the reading apparatus and processed by an appropriately matched software module running on the reading apparatus.

12. Method (12) according to claim 10 or claim 11, **characterised in that** the first database reference identifier and/or the second database reference identifier is manually transferred to the reading apparatus by the user of the reading apparatus via a corresponding input means of the reading apparatus.

13. Method (12) according to one of claims 10 to 12, **characterised in that** orientation identifiers (8, 10) have at least one cell (5) of the 2-D identification matrix (1), in order to specify the orientation of the 2-D identification matrix (1).

## Revendications

1. Procédé (12) de mise à disposition de premières et de secondes informations sous une forme lisible par une machine, sachant qu'un identifiant de référence de base de données unique constitué d'au moins un caractère est affecté aux premières informations lors d'une première étape d'initialisation (13), sachant que, lors d'une première étape de transmission d'identifiant (16), le premier identifiant de référence de base de donnée est ensuite transmis à une matrice d'identification 2D (1) par le marquage de cellules (5) prédéfinies sur cette matrice d'identification 2D (1), sachant que chaque caractère du premier identifiant de référence de base de données est représenté par une valeur de cellule (6) précise, sachant que la matrice d'identification 2D (1) comporte des cellules (5) qui sont chacune affectées à une seule valeur de cellule (6), sachant que la matrice d'identification 2D (1) présente des délimitations (4) linéaires destinées à séparer les cellules (5) et sachant que les délimitations (4) et les cellules (5) sont conçues de sorte que les valeurs des cellules (6) sont détectables par optique, **caractérisé en ce que**, lors d'une seconde étape ultérieure de transmission d'identifiant (18), un second identifiant de référence de base de données unique est transmis à la matrice d'identification 2D (1) par le marquage de cellules (5) prédéfinies sur cette matrice d'identification 2D (1), sachant que ce second identifiant de référence de base de données a été affecté aux secondes informations lors d'une seconde étape d'initialisation (19).

2. Procédé (12) selon la revendication 1, **caractérisé en ce que** la matrice d'identification 2D (1) est créée à l'issue de la première étape d'initialisation (13), lors d'une étape de création de la matrice d'identification (15), sachant que, immédiatement après la création de la matrice d'identification 2D (1), le premier identifiant de référence de base de données est transmis à la matrice d'identification 2D (1) lors de la première étape de transmission d'identifiant (16).

3. Procédé (12) selon la revendication 1 ou 2, **caractérisé en ce qu'**au moins un caractère du premier identifiant de référence de base de données se trouve également dans le second identifiant de référence, de sorte qu'au moins une cellule (5) de la matrice d'identification 2D (1) soit marquée à la fois lors de la première étape de transmission d'identifiant (16) et lors de la seconde étape de transmission d'identifiant (18).

4. Procédé (12) selon l'une quelconque des revendications précédentes, **caractérisé en ce que** les premières informations et/ou les secondes informations sont transmises à un dispositif de traitement de données électronique par un utilisateur, un module logiciel enregistré et exécuté sur le dispositif de traitement de données électronique, et dûment programmé, affectant le premier ou le second identifiant de référence de base de données aux premières et/ou aux secondes informations, et **en ce que** les premières et/ou secondes informations, avec le premier ou second identifiant de référence de base de données qui les identifie, sont sauvegardées dans une mémoire du dispositif de traitement des données électronique.

5. Procédé (12) selon l'une quelconque des revendications précédentes, **caractérisé en ce qu'**un dispositif d'affichage numérique électronique du dispositif de traitement des données électronique ou le dispositif d'affichage électronique d'un client connecté au dispositif de traitement des données électronique pour transmission de données présente à l'utilisateur le premier et/ou le second identifiant de référence de base de données.

6. Procédé (12) selon la revendication 4 ou 5, **caractérisé en ce que** le dispositif de traitement de données électronique consiste en un ou plusieurs serveurs reliés entre eux pour transmission des données.

7. Procédé (12) selon l'une quelconque des revendications précédentes, **caractérisé en ce qu'**une matrice d'identification 2D (1) encore inutilisée est imprimée sur un support adapté ou dessinée manuellement.

8. Procédé (12) selon l'une quelconque des revendications précédentes, **caractérisé en ce que** le premier et/ou le second identifiant de référence de base de données est reporté manuellement sur la matrice d'identification 2D (1) lors de la première (16) ou de la seconde (18) étape de transmission d'identifiant.

9. Procédé (12) selon l'une quelconque des revendications précédentes, **caractérisé en ce que** le premier et/ou le second identifiant de référence de base de données est associé à d'autres informations en réponse à une demande correspondante de l'utilisateur.

10. Procédé (12) selon l'une quelconque des revendications précédentes, **caractérisé en ce que** le premier et/ou le second identifiant de référence de base de données est lu, lors d'une étape de détection, par un appareil de lecture électronique dûment paramétré et transmis au dispositif de traitement des données relié à l'appareil de lecture pour transmission des données, sachant que le dispositif de traitement des données électronique, après lecture des premières ou secondes informations affectées au premier ou au second identifiant de référence de base de données, les retransmet à l'appareil de lecture.

11. Procédé (12) selon la revendication 10, **caractérisé en ce que** le premier et/ou le second identifiant de référence de base de données est automatiquement enregistré par une caméra sur l'appareil de lecture, puis traité par un module logiciel adapté, exécuté sur l'appareil de lecture.

12. Procédé (12) selon la revendication 10 ou 11, **caractérisé en ce que** le premier et/ou le second identifiant de référence de base de données est communiqué manuellement par l'utilisateur à l'appareil de lecture, par le biais d'un dispositif de saisie correspondant sur l'appareil de lecture.

13. Procédé (12) selon l'une quelconque des revendications 10 à 12, **caractérisé en ce qu'**au moins une cellule (5) de la matrice d'identification 2D (1) comporte un caractère d'orientation (8, 10) indiquant l'orientation de la matrice d'identification 2D (1).
